# EUROPEAN PATENT APPLICATION

(11) **EP 1 422 036 A1**
(43) Date of publication of application: **26.05.2004**
(21) Application number: 02760756.3
(22) Date of filing: 27.08.2002
(51) Int. Cl.: B29C 33/04, B29C 35/02

(54) **METHOD AND DEVICE FOR VULCANIZING TIRE**

(30) Priority: 28.08.2001 JP 2001258389; 01.11.2001 JP 2001336895; 01.11.2001 JP 2001336898; 01.11.2001 JP 2001336903; 01.11.2001 JP 2001336905; 12.02.2002 JP 2002033535; 18.02.2002 JP 2002040400; 03.06.2002 JP 2002161553
(71) Applicant: The Yokohama Rubber Co., Ltd., Tokyo 105-8685 (JP)
(72) Inventor: SEKO, Akikazu, The Yokohama Rubber Co., Ltd., Hiratsuka-shi, Kanagawa 254-8601 (JP); SANO, Takuzou, The Yokohama Rubber Co., Ltd., Hiratsuka-shi, Kanagawa 254-8601 (JP); TAKADA, Noboru, The Yokohama Rubber Co., Ltd., Hiratsuka-shi, Kanagawa 254-8601 (JP)
(74) Representative: HOFFMANN EITLE
(86) International application number: PCT/JP2002/008595
(87) International publication number: WO 2003/020487

(57) **Abstract**

A tire press includes a sectional type mold which has an annular lower mold section secured to an upper surface of a lower plate, an annular upper mold section disposed under an upper plate which is vertically moveably placed above the lower plate so that the upper mold section moves vertically along with the upper plate, and a side mold section having a plurality of sectors divided along a circumferential direction thereof and located radially outwardly of the lower mold section in an openable and closable manner. Holding segments which hold the sectors are provided on outer peripheral sides of the sectors. The holding segments are placed on the lower plate so as to move forward and away from the center of the annular lower mold section. Guide segments which are engagable with and disengagable from outer peripheral sides of the holding segments are suspended from the upper plate radially outwardly of the upper mold section. First heating means are provided under the lower mold section, second heating means are provided over the upper mold section, and third heating means are provided on the outer peripheral side of the sectors. The engagement of the guide segments with the holding segments causes the holding segments to move forward to close the sectors, thereby setting a green tire in the mold. After applying a pressure into the set green tire to inflate it, the green tire is heated by the heating means to cure it.

## Description

### TECHNICAL FIELD

The present invention relates to a tire curing method and a tire press for curing pneumatic tires and, more particularly, to a tire curing method and a tire press using a sectional type mold.

### TECHNICAL BACKGROUND

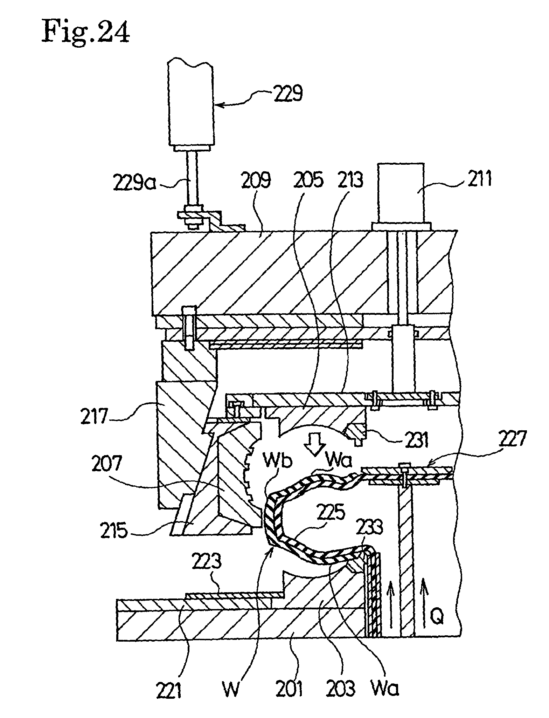

In general, a tire press using a sectional type mold, as shown in FIG. 24, includes an annular lower mold section 203 fixed to the upper surface of a lower plate 201, an annular upper mold section 205 located above the lower mold section 203, and a side mold section comprising a plurality of sectors 207 placed radially outwardly of the upper mold section 205.

The upper mold section 205 is attached to an upper mold support plate 213 which is located under an upper plate 209 and can be vertically moved by a cylinder 211. Fixedly secured to the outer peripheral side of each sector 207 is a holding segment 215, which is attached to each of guide segments 217 hanged from the outer peripheral portion of the upper plate 209 and can slide in a vertically inclined direction.

Provided on the upper surface of the upper plate 201 is a subplate 221, on the upper surface of which are mounted a plurality of guide rails 223 extending in the radial direction of the annular lower mold section 203, the holding segments 215 being engagable with and disengagable from the guide rails 223.

Installed radially inwardly of the lower mold section 203 is a center mechanism 227 having a bladder 225 which can be vertically moved. The upper plate 209 can be moved up and down by the rod 229a of an elevating means 229. In the drawing, reference numeral 231 denotes an upper mold bead ring and reference numeral 233 demotes a lower mold bead ring.

According to the above tire press, the bladder 225 is expanded and holds a green tire which has loaded and the upper mold section 205 is lowered to a starting position for closing the mold by means of the cylinder 221. The upper plate 209 is then lowered by extension of the rod 229a of the elevating means 229 to set the upper mold section 205 to one side portion Wa (upper side of the drawing) of the green tire W while the lower mold section 203 is set to the other side portion Wa (lower side of the drawing) of the green tire W.

Meanwhile, the holding segments 215 are lowered by the lowering of the upper plate 209, are engaged with the radially extending guide rails 223, and are then advanced toward the center along the guide rails 223 to set the sectors 207 to the tread portion Wb of the green tire W. After the mold has set to the green tire W as described above, a hot pressure fluid is supplied into the bladder 225, as described in the arrow Q, to inflate the green tire W. After that, a steam for heating is supplied through steam passages, not shown, to heat and cure the green tire W, thereby obtaining a vulcanized pneumatic tire.

The conventional tire press discussed above, however, must use the upper plate 209 which is thick and heavy in order to strengthen it, since the upper plate 209 supports components such as heavy side and upper mold sections. A support structure for supporting the upper plate 209 above is large in size and the elevating means 229 for vertically moving the thick and heavy upper plate 209 is also required to be large in size. As a result, there are problems such that the entire tire press is large in size and a large space for installation is required.

Since the holding segments 215 are arranged so as to be engaged with and to be disengaged from the guide rails 223, a certain amount of clearance is needed between each holding segment 215 and each guide rail 223 to reliably engage the holding segments 215 with the guide rails 223. Due to the clearance, the sectors 207 which have set are moved by a pressure applied to the sectors 207 from their inner sides during vulcanization, thereby deteriorating the uniformity of vulcanized pneumatic tires.

### DISCLOSURE OF THE INVENTION

It is an object of the present invention to provide a tire curing method and a tire press which can be small in size and reduce a space for installation.

It is another object of the present invention to provide a tire curing method and a tire press which can improve the uniformity of vulcanized tires.

In order to achieve the aforementioned object, the present invention provides a tire curing method for curing a green tire by means of a tire press having a sectional type mold which includes an annular lower mold section secured to an upper surface of a lower plate, an annular upper mold section disposed under an upper plate vertically moveably placed above the lower plate so that the upper mold section moves vertically along with the upper plate, and a side mold section having a plurality of sectors divided along a circumferential direction thereof and located radially outwardly of the lower mold section in an openable and closable manner, wherein holding segments which hold the sectors are provided on outer peripheral sides thereof, the holding segments being placed on the lower plate so as to move forward and away from a center of the annular lower mold section, guide segments which are engagable with and disengagable from outer peripheral sides of the holding segments being suspended from the upper plate radially outwardly of the upper mold section, first heating means being provided under the lower mold section, second heating means being provided over the upper mold section, and third heating means being provided on the outer peripheral side of each of the sectors, the method comprising the steps of: engaging the guide segments with the holding segments to cause the holding segments to move forward; closing the sectors to set the green tire in the mold; applying a pressure into the set green tire to inflate it; and heating the green tire by the first, second and third heating means to cure it.

A tire press according to the present invention includes a sectional type mold which has an annular lower mold section secured to an upper surface of a lower plate, an annular upper mold section disposed under an upper plate vertically moveably placed above the lower plate so that the upper mold section moves vertically along with the upper plate, and a side mold section having a plurality of sectors divided along a circumferential direction thereof and located radially outwardly of the lower mold section in an openable and closable manner, wherein holding segments which hold the sectors are provided on outer peripheral sides thereof, the holding segments being placed on the lower plate so as to move forward and away from a center of the annular lower mold section, guide segments which are engagable with and disengagable from outer peripheral sides of the holding segments being suspended from the upper plate radially outwardly of the upper mold section and being arranged such that the engagement of the guide segments with the holding segments causes the holding segments to move forward and backward to close and open the sectors, first heating means being provided under the lower mold section, second heating means being provided over the upper mold section, third heating means being provided on the outer peripheral side of each of the sectors, and the green tire set in the mold being curable by the heating means.

As described above, since the sectors and the holding segments are mounted on the lower plate side, the weight of the components supported by the upper plate can be reduced much less than that of the components in the prior art, thereby allowing the upper plate which supports the components to be smaller in size and to be lighter in weight than before. Also, associated components supporting the upper plate can be reduced in size and in weight. In addition, means for vertically moving the upper plate is reduced in size. Accordingly, the tire press can be minimized in size, and the space for installing the tire press can be reduced. Also, electric power consumed by the means for vertically moving the upper plate is reduced, thereby allowing a decrease in power consumption.

The holding segments are always in engagement with the lower plate side, and do not have a structure such as the prior art in which the holding segments engage therewith and disengage therefrom, whereby the clearance between the engagement parts can be smaller than that of the prior art. Thus, movement of the sectors due to pressure applied to the sectors from its radially inner side can be less than is known in the prior art, thereby allowing tire uniformity to be improved.

### BRIEF DESCRIPTION OF THE DRAWINGS

FIG. 1 is a cross-sectional view showing a tire press according to the present invention in an open state, taken along the line I-I of FIG. 3;
FIG. 2 is a cross-sectional view, corresponding to FIG. 1, showing the tire press of FIG. 1 in a closed state, which, for the sake of easy understanding, includes a section of a holding segment engaged with a guide segment and a section of a positioning pin engaged with a positioning member;
FIG. 3 is an illustrative plan view showing a state in which the guide segments engage with the holding segments holding the sectors in the closed condition shown in FIG. 2;
FIG. 4 is a cross-sectional view showing a state in which the holding segment engages with guide rails;
FIG. 5 is an enlarged cross-sectional view of a guide segment and a holding segment shown in FIG. 1, taken along the line V-V and the line V'-V' of FIGS. 6;
FIG. 6 (a) is a cross-sectional view of the guide segment, taken along the line VI-VI of FIG. 5;
FIG. 6 (b) is a cross-sectional view of the holding segment, taken along the line VI'-VI' of FIG. 5;
FIG. 7 is a perspective view of a preferred first sealing means;
FIG. 8 is a vertically cross-sectional view of the first sealing means in FIG. 7;
FIG. 9 is a vertically cross-sectional view showing a state in which the first sealing means of FIG. 8 engages with a stop means when the mold is clamped;
FIG. 10 is a vertically cross-sectional view of another preferred first sealing means;
FIG. 11 is a vertically cross-sectional view showing a state in which the first sealing means of FIG. 10 engages with a stop means when the mold is clamped;
FIG. 12 is a plan view of FIG. 2;
FIG. 13 is an illustrative cross-sectional view showing a locking means in a locking state;
FIG. 14 is an illustrative cross-sectional view showing the locking means of FIG. 13 in an unlocking state;
FIG. 15 is an enlarged partial cross-sectional view of peripheral parts of the lower mold section;
FIG. 16 is a plan view of the upper mold support plate;
FIG. 17 is a cross-sectional view taken along the line XVII-XVII of FIG. 16;
FIG. 18 is a cross-sectional view taken along the line XVIII-XVIII of FIG. 19;
FIG. 19 is a plan view of the holding segment to which electric heaters are attached;
FIG. 20 is an enlarged plan view of the electric heater;
FIG. 21 is a front view of FIG. 20;
FIG. 22 is a partial plan view showing positioning means;
FIG. 23 is a cross-sectional view showing another tire press according to the present invention in an open state; and
FIG. 24 is a partial cross-sectional view showing a conventional tire press.

### BEST MODES FOR CARRYING OUT THE INVENTION

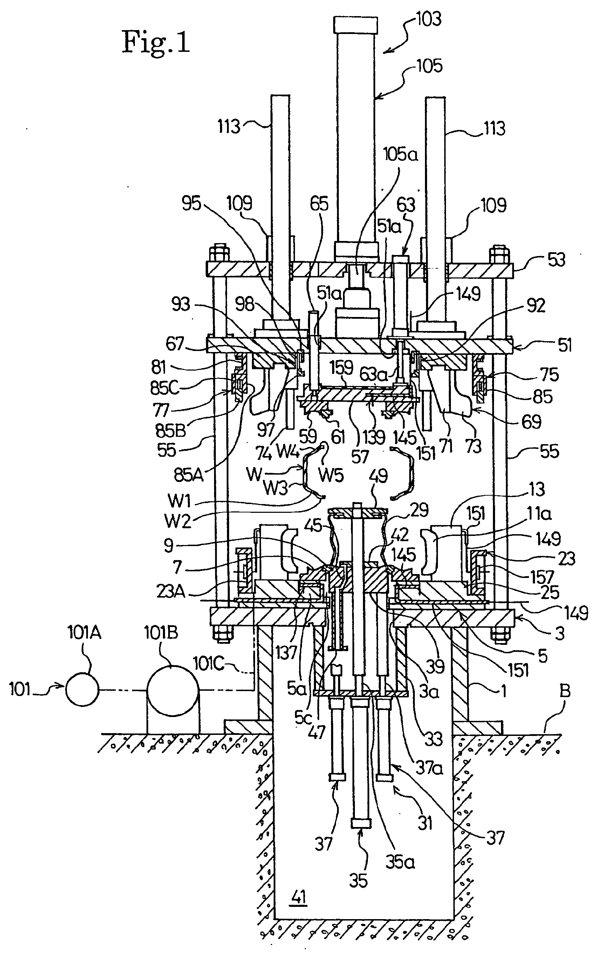

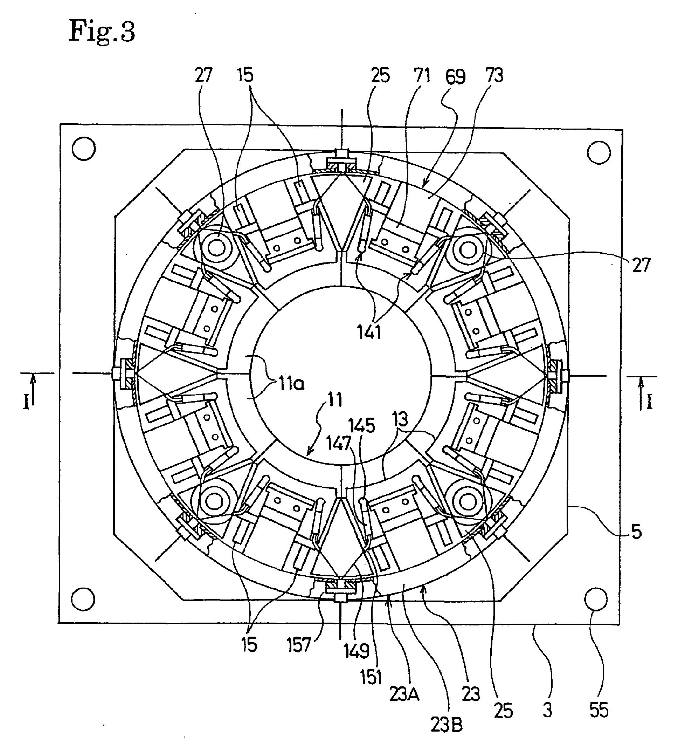

With reference to FIG. 1, there is shown a tire press according the present invention, which includes a plurality of support members 1 which stand on a base surface B, and a horizontally extending base plate 3 which is placed on the upper ends of the support members 1. The base plate 3 is formed square in shape as shown in FIG. 3, and has a circular opening in its center as shown in FIG. 1.

Attached on the base plate 3 is a square-shaped lower plate 5 with its corners being cut off. The lower plate 5 has a center region 5a in the center of which is formed a circular opening 5c.

Mounted on the upper surface of the center region 5a is an annular lower mold section 7 for molding one side portion W1 of a green tire W. Affixed to an inner peripheral side of the lower mold section 7 is a lower mold bead ring 9 for molding one bead portion W2 of the green tire W.

Radially outwardly of the lower mold section 7 there is provided a side mold section 11 for molding a tread portion W3 of the green tire W. The side mold section 11 comprises a plurality of sectors 11a into which a toroid is divided along its circumferential direction. A holding segment 13 holding the sector 11a is disposed radially outwardly of each sector 11a. Each sector 11a is detachably fastened to each corresponding holding segment 13 by means of screws, not shown.

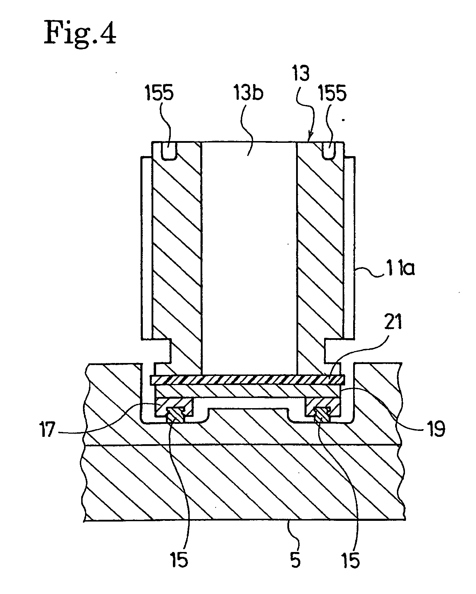

A plurality of guide rails 15 for moving the sectors 11a between a mold open position and a mold closed position, as shown in FIG. 3, are provided on an outer periphery of the upper surface of the lower plate 5 and extend straight toward the center side. As shown in FIG. 4, placed on each pair of parallel guide rails 15 is a holding segment mounting plate 19 having on its lower surface linear bearings 17 which engage with the parallel guide rails 15. Each holding segment 13 is fixed on the upper surface of each holding segment mounting plate 19 via a thermal insulating layer 21 which is formed from a composite composed of fiber glass and heat-resistant resin such as epoxy resin having thermal durability. Each holding segment 13 can move along the guide rails 15 toward and away from the center of the lower mold section 7, and each sector 11a can be moved between the mold open position and the mold closed position by the movement of each holding segment 13.

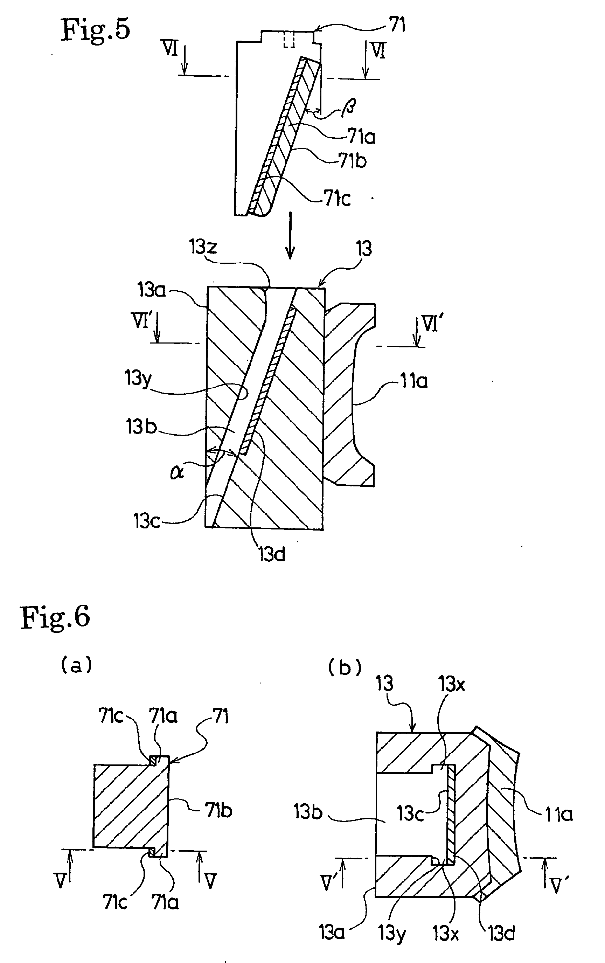

Each holding segment 13 has a vertically extending depression 13b on an outer peripheral surface 13a thereof, as shown in FIGS. 5 and 6. The depression 13b has on both wall surfaces of its bottom portion grooves 13x which extend along the depression extending direction. The bottom surface 13c which is flat and includes one wall surface of each of the grooves13x is a sloping surface inclined so that its lower side is radially outwardly of its upper side. A plate member 13d for reducing the frictional resistance of a guide segment described later is provided so that one surface of the plate member 13d is located in the same plane as the bottom surface 13c.

A stop means 23 for preventing the holding segments 13 from moving backward during vulcanization is provided on a peripheral portion of the upper surface of the lower plate 5 which is positioned radially outwardly of the holding segments 13. The stop means 23 comprises a cylindrical member 23A securely mounted on the upper surface of the lower plate 5 so as to surround the entire holding segments 13. The cylindrical member 23A is hermetically mounted on the upper surface of the lower plate 5 because it is used as a part of a first sealing means described later.

A projecting shelf portion 25 which is triangular in shape when seen from the top, as shown in FIG. 3, is provided between each pair of the guide rails 15 on the upper surface of the lower plate 5. A cylindrical positioning part 27 to which a positioning pin described later is engaged in a fitting manner projects from the upper surface of every other shelf portion 25.

A center mechanism 31 with a bladder 29 for vulcanization is provided radially inwardly of the lower mold section 7. The center mechanism 31 includes a first cylinder 35 attached to the center of a support frame 33 (center of the lower mold section 7) hanged from the periphery of the opening 3a of the base plate 3. The vertically extending rod 35a of the first cylinder 35 is an elevating post vertically moved by operation of the first cylinder 35.

A plurality of second cylinders 37 are attached to the supporting frame 33 around the first cylinder 35. Secured to the upper ends of upwardly extending rods 37a of the second cylinders 37 is a lower bladder attachment member 39 to which the lower end of the cylindrical vulcanization bladder 29 is attached. When the second cylinders 37 are operated, the rods 37a are moved up or down, thereby raising or lowering the lower bladder attachment member 39. The first and second cylinders 35 and 37 extend into a pit 41 formed on the base surface B. Fixed on the upper surface of the lower bladder attachment member 39 is an emission member 42 having supply ports for radially emitting a thermal pressurized medium into the vulcanization bladder 29. A passageway 45 in communication with the emission member 42 is formed in the lower bladder attachment member 39, and a supply pipe 47 for supplying a thermal pressurized medium is connected to the passageway 45. The supply pipe 47 is connected to a thermal pressurized medium supplying source, not shown.

The elevating post (rod 35a) upwardly extends through the lower bladder attachment member 25. An upper bladder attachment member 49 is fixedly attached to the upper end of the elevating post. The vulcanization bladder 29, the upper end of which is gripped by the upper bladder attachment member 49, is provided on the upper side of the elevating post which vertically movably stands.

A horizontally extending upper plate 51 is placed above the lower plate 5. The upper plate 51 slidably engages with a plurality of columns 55 mounted between the base plate 4 and a horizontally extending top plate 53 which is placed above the upper plate 51 and is shaped in square, and moves vertically along the columns 55.

A discoid upper mold support plate 57 is provided under the central part of the upper plate 51. Affixed on the lower surface of the upper mold support plate 57 is an annular upper mold section 59 for molding the other side portion W4 of the green tire W. Fixed to an inner peripheral side of the upper mold section 59 is an upper mold bead ring 61 for molding the other bead portion W5 of the green tire W.

Connected to the upper surface of the upper mold support plate 57 are the lower ends of the vertically extending rods 63a of elevating cylinders 63 which are mounted on the upper plate 51 and arranged in a predetermined interval along its circumferential direction. There are provided on an outer peripheral part of the upper surface of the upper mold support plate 57 a plurality of guide rods 65 vertically extending through the upper plate 51 and arranged in a predetermined interval along the circumferential direction of the upper mold support plate 57. The rods 63a extend or retract by activation of the elevating cylinders 63, thereby allowing the upper mold support plate 57 to be moved up or down with the support plate 57 guided by the guide rods 65.

Guide segments 69 having the same number as the holding segments 13 are hanged radially outwardly of the upper mold support plate 57 from the lower surface of the upper plate 51 in a predetermined interval along its circumferential direction via a ring-shaped segment attachment member 67. Each guide segment 69 comprises a segment body 71 which engages with the holding segment 13, and a stop means engaging member 73 attached to the outer peripheral side of the segment body 71.

Each segment body 71, as shown in FIG. 6a, has on both side surfaces thereof projections 71a which are engagable with the grooves 13x formed in the depression 13b of the holding segment 13. The guide segment 71 has an inner peripheral surface 71b which is a flat sloping surface with the same angle as the bottom surface 13c in the depression 13b of the holding segment 13. The projections 71a extend along the inner peripheral surface 71b. One side surface of each projection 71a is formed so that it is located in the same plane as the inner peripheral surface 71b, and a plate member 71c for reducing the frictional resistance of the holding segment 13 which comes into sliding contact therewith is provided on the other side surface.

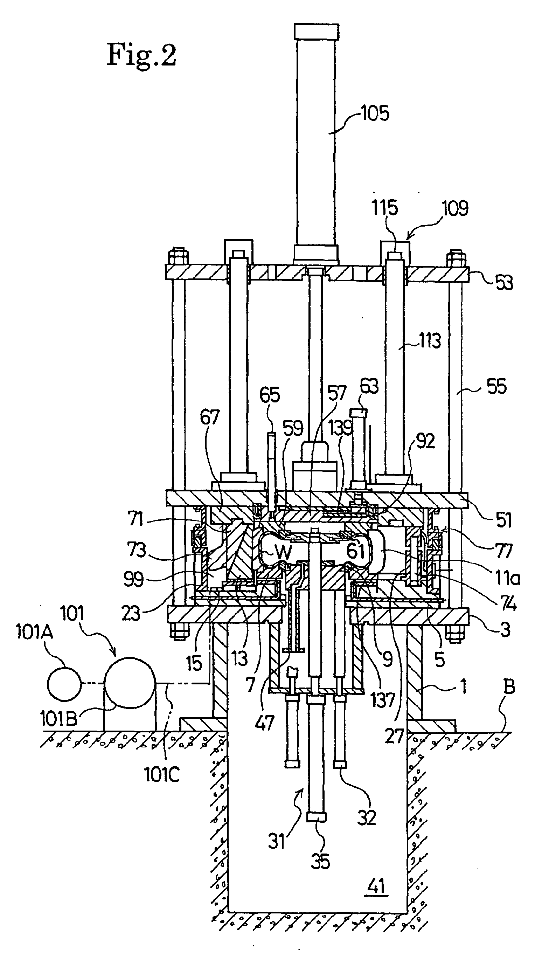

When the guide segments 69 are lowered by lowering of the upper plate 51, the segment bodies 71 are engaged with the depressions 13b of the holding segments 13 with the projections 71a being engaged with the grooves 13x. When further lowered, the holding segments 13 are pushed by the guide segments 69, and moved radially inward along the guide rails 15, thereby moving the sectors 11a from the mold open position (position in FIG. 1) toward the mold closed position. When the guide segments 69 are raised by elevation of the upper plate 51 in the mold closed position shown in FIG. 2, the holding segments 13 are pulled by the guide segments 69, and moved radially outward, thereby moving the sectors 11a toward the mold open position, where the holding segments 13 are disengaged from the upwardly moving guide segments 69. The guide segments 69, as described above, are engagable with and disengagable from the holding segments 13.

An inclined angle a of the bottom surface (engaged surface) 13c in the depression 13b formed in the outer peripheral surface 13a of the holding segment 13, and an inclined angle β of the inner peripheral surface (engaging surface) 71b of the segment body 71 which comes into sliding contact therewith, with respect to the vertical direction, are preferably 15 to 20 degrees. If the inclined angles α and β are out of the above range, it is difficult that the vertically lowering guide segments 69 smoothly engages with the holding segments 13. The angles may more preferably be about 18 degrees.

Each holding segment 13 has a sloping wall surface (wall surface in a radially outer position) 13y which faces each groove 13x and comes into sliding contact with the plate member 71c provided on the other side of the projection 71a of the segment body 71, the upper end 13z of the sloping wall surface 13y, as shown in FIG. 5, being preferably chamfered in a circular arc having a radius of 10 to 30 mm to form a curved surface, thereby making the guide segments into smooth engagement with the holding segments 13.

The stop means engaging members 73, which are formed in a shape having a projecting lower part, are detachably fastened to the outer peripheral surfaces of the segment bodies 71 by means of bolts, not shown. When vulcanized after the sectors 11a have been moved to the mold closed position, the stop means engaging members 73 come into contact with the stop means 23 and prevent the holding segments 13 from moving backward by an inner pressure applied into the bladder 29 not to open the sectors 11a. A clearance between the stop means 23 and each stop means engaging member 73, when the sectors 11a are in the mold closed position prior to vulcanization, may be substantially 0.1 to 0.2 mm. If the clearance is less than 0.1 mm, there is a risk that a problem may occur such as contact between the stop means 23 and the stop means engaging members 73 when the guide segments 69 are lowered. If the clearance is more than 0.2 mm, it is not preferable since the rubber is overflowed from gaps produced when the holding segments are moved back by the inner pressure during vulcanization.

The guide segments 69 each may be formed from a single member which integrally has a segment body 71 and stop means engaging member 73, but may preferably be of a two-peace structure as mentioned above. In the case of employing such structure, the clearance between the stop means 23 and each stop means engaging member 73 can be easily adjusted by attaching a new stop means engaging member 73 to the segment body 71, or by placing a spacer, not shown, between the stop means 23 and each stop means engaging member 73.

Positioning pins 74, which can fit within the positioning parts 27, project downwardly from places, corresponding to respective positioning parts 27 between the guide segments 69, of the lower surface of the segment attachment member 67.

A first sealing means 75 for hermetically sealing the entire mold during vulcanization is provided on the lower surface of the upper plate 51 radially outwardly of the segment attachment member 67. The first sealing means 75 comprises a first sealing cylindrical assembly 77 which is attached to the lower surface of the upper plate 51. The first sealing cylindrical assembly 77 includes an upper ring member 81 which is hermetically fixed to the lower surface of the upper plate 51, and a lower ring assembly 85 which is attached to the lower peripheral side of the upper ring member 81. The lower ring assembly 85 includes a fixed ring member 85A hermetically fixed to the upper ring member 81, and a slide ring member 85B hermetically attached to the outer peripheral side of the fixed ring member 85A. The slide ring member 85B is vertically slidably coupled to the fixed ring member 85A by means of coupling rods 85C placed in a predetermined interval along the ring circumferential direction, and is lowered by its own weight.

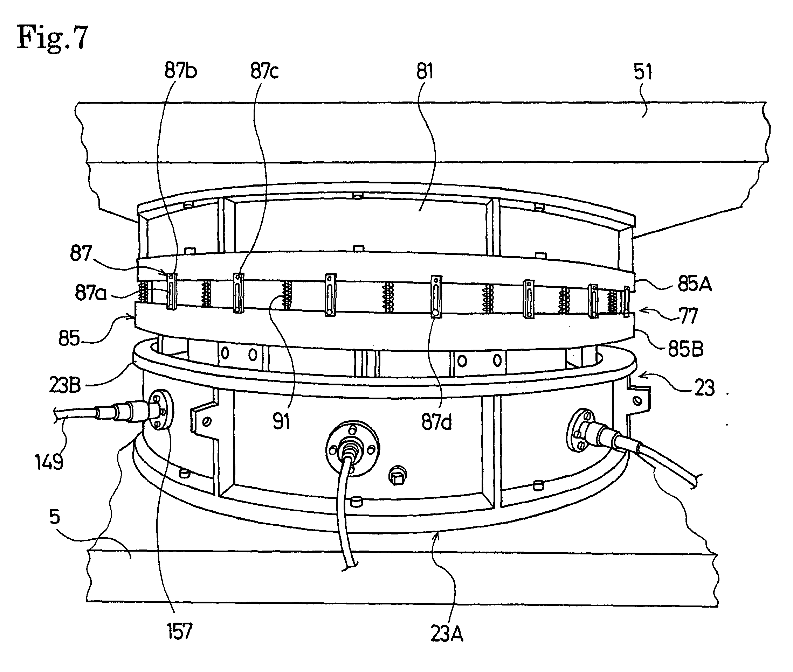

As shown in FIGS. 7 to 9, it is preferable that the first sealing cylindrical assembly 77 is constructed such that the slide ring member 85B is always urged downward by means of springs 91. The first sealing cylindrical assembly 77 shown here has a lower ring assembly 85 hermetically attached via an O-shaped sealing ring 79 to the lower end face of the upper ring member 81 hermetically fixed to the lower surface of the upper plate 51. The lower ring assembly 85 includes a fixed ring member 85A hermetically fixed to the lower end face of the upper ring member 81 via the sealing ring 79, and a slide ring member 85B hermetically attached to the lower outer-peripheral side of the fixed ring member 85A via an O-shaped sealing ring 83. The slide ring member 85B is vertically slidably coupled to the fixed ring member 85A by means of coupling means 87 located in a predetermined interval along the ring circumferential direction.

Each of the coupling means 87 includes a metal plate piece 87b having a vertically extending elongated opening 87a, and the metal plate piece 87 is fastened at its upper end by means of a bolt 87c against the outer peripheral surface of an annular flange portion 85A1 formed on the upper part of the fixed ring member 85A. Bolts 87d protrude from the upper end outer-peripheral surface of the slide ring member 85B, and the heads of the bolts 87d engage with the elongated openings 87a. The lower surface of the flange portion 85A1 of the fixed ring member 85A has holes 85A2 in a predetermined interval along the ring circumferential direction, and pins 88 protrude downwardly from the bottom faces in the holes 85A2. The upper end surface of the slide ring member 85B has holes 85a in a predetermined interval along the ring circumferential direction, into which the pins 88 can be inserted. Coil springs 91 are each placed between both corresponding holes 81b and 85a with each spring 91 surrounding each pin 88, and always urge the slide ring member 85B downwardly.

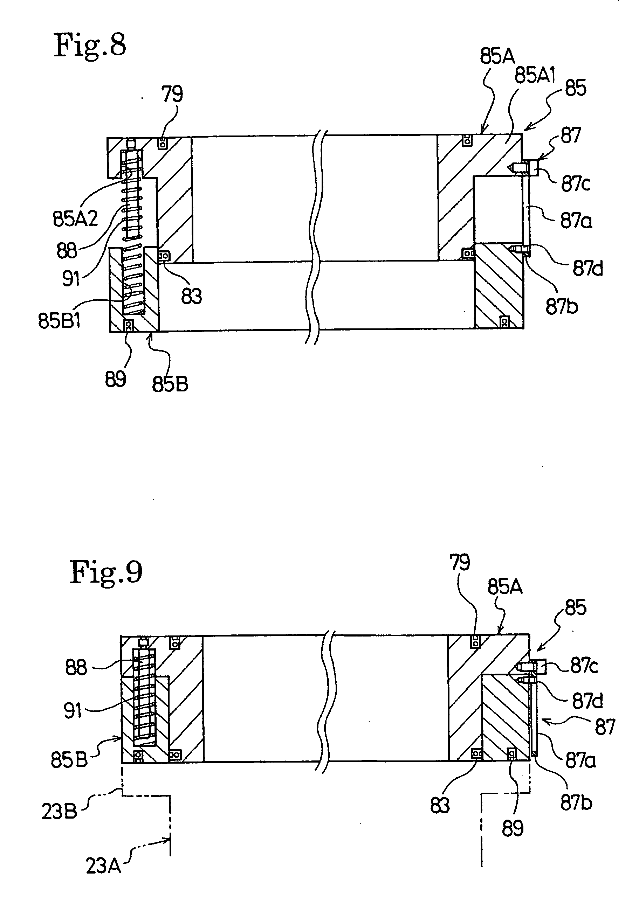

An O-shaped sealing ring 89 is attached to the lower surface of the slide ring member 85B, whereby the slide ring member 85B can hermetically be engaged with a circular flange portion 23B formed on the top of the cylindrical member 23A constituting the stop means 23. The first sealing means 75 located between the upper plate 51 and lower plate 5 surrounds the entire mold hermetically during vulcanization in such a manner that, as shown in FIG. 9, the lower end of the slide ring member 85B comes into contact with the cylindrical member 23A with the slide ring member being engaged with the flange portion 85A1 of the fixed ring member 85A.

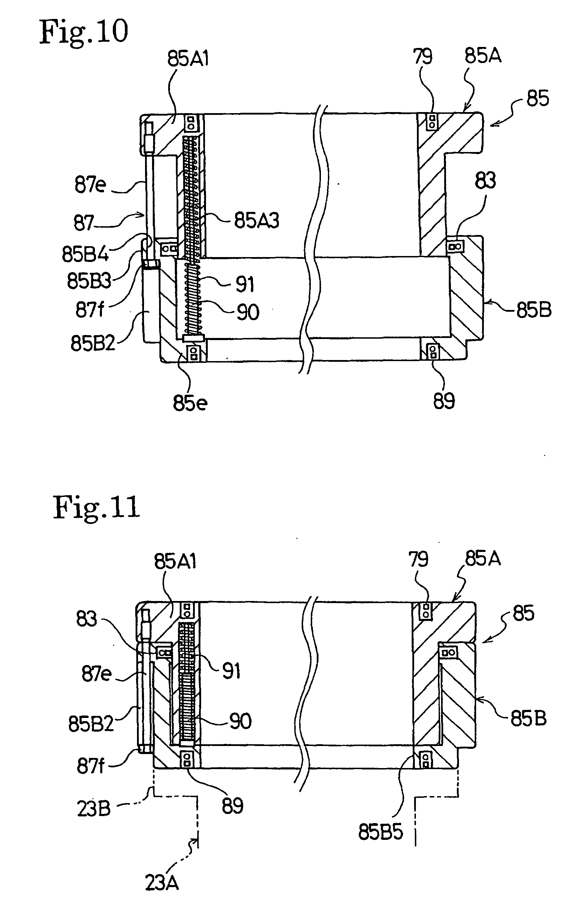

The lower ring assembly 85 of the first sealing cylindrical assembly 77 may be formed as shown in FIGS. 10 and 11. In the lower ring assembly 85 shown here, pins 87e are used as coupling means 87 connecting the fixed ring member 85A and slide ring member 85B. The pins 87e are located between the flange portion 85A1 of the fixed ring member 85A and the slide ring member 85B, and fixed to the lower surface of the flange portion 85A1 with the upper ends of the pins 87e embedded therein. Straight grooves 85b2 are formed from the lower end face to the upper end portion of the slide ring member 85B in a predetermined interval along the ring circumferential direction. Each upper end section 85B3 adjacent to each of the straight grooves 85B2 has a perforation 85B4 arranged such that it extends from the upper end face to the straight groove 85B2 of the slide ring member 85B, and the lower sides of the pins 87e are inserted through the perforations 85B4. Affixed to the lower ends of the pins 87e are Insertion keeping members 87f having a larger outer diameter than the diameter of the perforations. The lower end face of the fixed ring member 85A has holes 85A3 in a predetermined interval along the ring circumferential direction. A circular flange portion 85B5 projects radially inwardly from the lower end of the slide ring member 85B, and pins 90 which are insertable into the holes 85A3 are provided on the upper face of the flange portion 85B5 in a predetermined interval along the ring circumferential direction. Each coil spring 91 is mounted between the lower end of the pin 90 and the corresponding hole 81 c and always urges the slide ring member 85B downward to make it in the state of FIG. 10. As shown in FIG. 11, during curing, the lower end of the slide ring member 85B comes into contact with the flange portion 23B of the cylindrical member 23A with the slide ring member being in contact with the flange portion 85A1 of the fixed ring member 85A, and the first sealing means 75 hermetically surround the whole mold.

Provided on the lower surface of the upper plate 51 radially inwardly of the segment attachment member 67 is a second sealing means 92 which makes a hermetical seal between the upper plate 51 and the upper mold support plate 57 during vulcanization so that the space including the guide rods 65 and the rods 63a of the elevating cylinders 63 are placed inside the second sealing means. The second sealing means 92 comprises a second sealing cylindrical assembly 93 which is provided on the lower surface of the upper plate 51. The second sealing cylindrical assembly 93 includes an upper ring 95 hermetically fixed to the lower surface of the upper plate 51 through an O-shaped seal ring, not shown, and a lower ring 97 hermetically attached to the outer circumferential side of the lower side of the upper ring 95 through an O-shaped seal ring, not shown. The lower ring 97 is coupled to the upper ring 95 by connecting rods 98 located in a predetermined interval in the ring circumferential direction such that the lower ring 97 is vertically movable and lowered by its weight.

The hermetical engagement of the lower end of the lower ring 97 with the upper surface of the outer peripheral portion of the upper mold support plate 57 seals the through holes 51a of the upper plate 51 through which the guide rods 65 and the rod 63a penetrate. The second sealing means 92 may also be preferably structured as in the first sealing means 75, as shown in FIGS. 7 to 11.

Connected to a chamber 99 (see FIG. 2) hermetically surrounded by the first sealing means 75 is a suction means 101 for making the chamber vacuum. The suction means 101 includes a vacuum pump 101A and a vacuum tank 101B connected to the vacuum pump 101A. The vacuum tank 101B is communicatingly connected to the chamber 99 via a pipe 101C. When the vacuum pump 101A is operated, the air in the chamber 99 is sucked, thereby making the chamber 99 into a vacuum state.

There is provided on the top plate 53 a lifting means 103 for vertically moving the upper plate 51. The lifting means 103 includes a hydraulic cylinder 105 which is placed on the center of the upper surface of the top plate 53. The vertically extending rod 105a of the hydraulic cylinder 105 is fixedly attached at its lower end to the center of the upper surface of the upper plate 51. The operation of the hydraulic cylinder 105 vertically extends and retracts the rod 105a to thereby move the upper plate 51 vertically with the upper plate 51 being guided by the columns 55. The hydraulic cylinder 105 is also used to apply a clamping force on the upper mold section 59 during vulcanization.

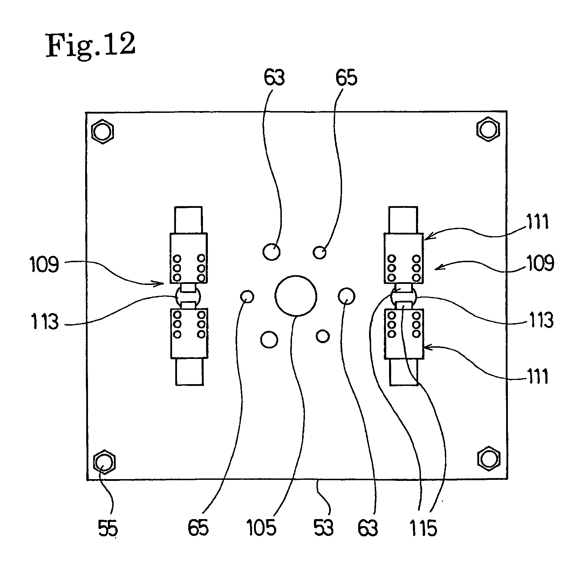

There are provided on the top plate 53 a plurality (two in the drawings) of locking means 109 for making the upper mold section 59 locked in the state in which the upper mold section 59 is clamped by the hydraulic cylinder 105 in the mold clamping position. Each of the locking means 109, as shown in FIG. 12, has a pair of hydraulic cylinder units 111 placed on the upper surface of the top plate 53. Each of hydraulic cylinder units 111 includes a projectable stop 115 for preventing the raising of each of vertically extending locking shafts 113 which are provided on the upper surface of the upper plate 51 and penetrate through the top plate 53.

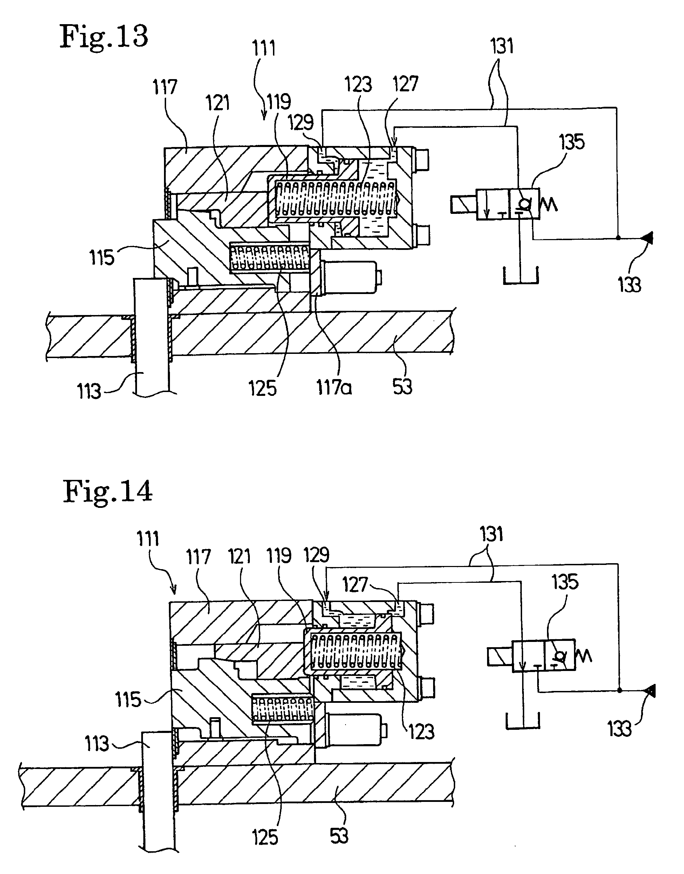

The hydraulic cylinder units 111 of this type can preferably include one shown in FIGS. 13 and 14. The hydraulic cylinder unit 111 shown comprises a body 117, a cylindrical piston 119 having a closed front end, and a stop 115, the piston 119 and the stop 115 being horizontally slidably mounted in the body 117. Attached to the front end of the piston 119 is a pushing member 121 for pushing the stop 115 into a projected position. A first spring 123 is placed inside the piston 119, the first spring 123 always urging the piston 119 toward the front end side. A second spring 125 is attached between the stop 115 and a body wall 117a in the rear side (right side of FIG. 13), the second spring 125 always urging the stop 115 to be located in a retracted position. The first spring 123 has a spring force greater than the second spring 125.

There are formed in the body 117 a first port 127 and a second port 129 to which hydraulic pipes 131 are connected. As shown in FIG. 13, oil transmitted from a hydraulic source 133 is supplied via a solenoid selector valve 135 to the first port 127 and thereby advances the piston to make the stop 115 into a projected state. This causes the stop 115 to come into engagement with the top end of the locking shaft 113, thereby locking the locking shaft 113 such that the locking shaft 113 is prevented from raising. The stops 115 of two hydraulic cylinder units 111 come into engagement with each locking shaft 113 to lock it. This prevents the upper mold section 59 in the curing position (clamping position) from opening due to pressure applied inside during vulcanization.

As shown in FIG. 14, oil transmitted from the hydraulic source 133 is supplied to the second port 129 via the solenoid selector valve 135 to thereby retract the piston 119. This causes the stop 115 to be pulled by the second spring 125 to be positioned in the retracted position, which results in release of the locking between the stop and the locking shaft 113.

When oil leaks out of the pipes 131 or the like and the pressure of the oil supplied to the ports 127 and 129 becomes zero, the first spring 123 causes the piston 119 to advance to thereby keep the stop 115 in the projected state.

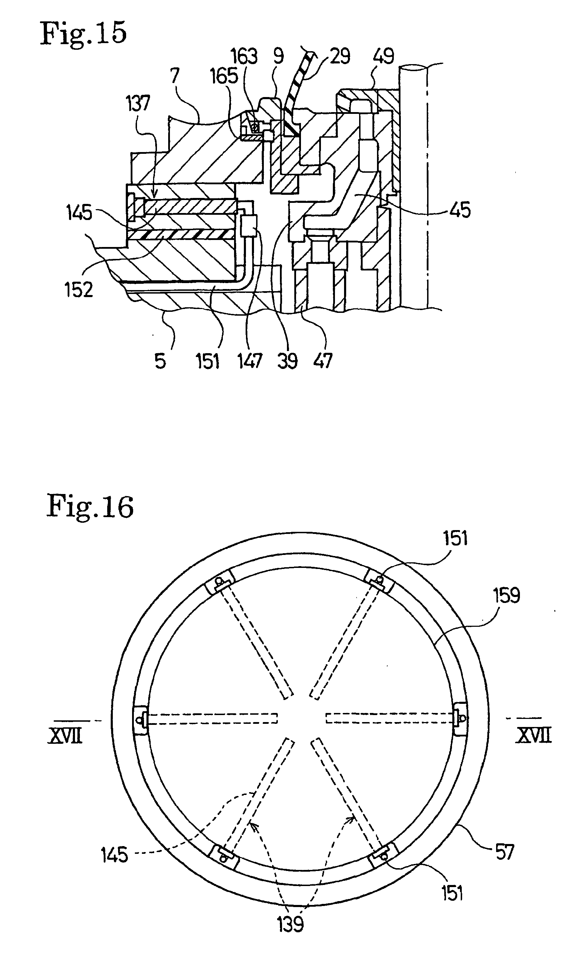

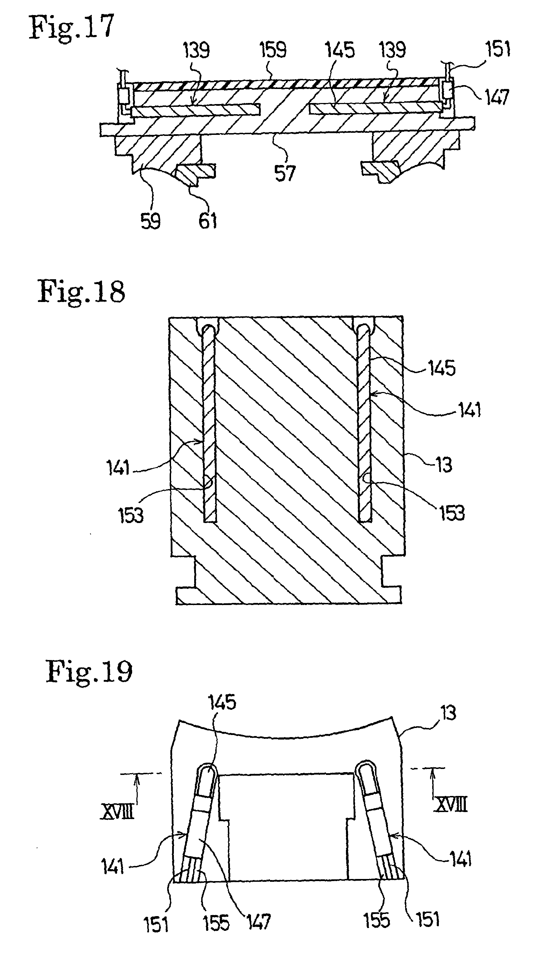

First heating means 137, as shown in FIG. 15, are disposed inside the lower plate 5 under the lower mold section 7, second heating means, as shown in FIGS. 16 and 17, are placed inside the upper mold support plate 57 above the upper mold section 59, and third heating means 141, as shown in FIG. 18 and 19, are disposed inside the holding segments 13 on the peripheral side of the sectors 11a, the heating means 137, 139 and 141 heating the green tire W set in the mold to cure it.

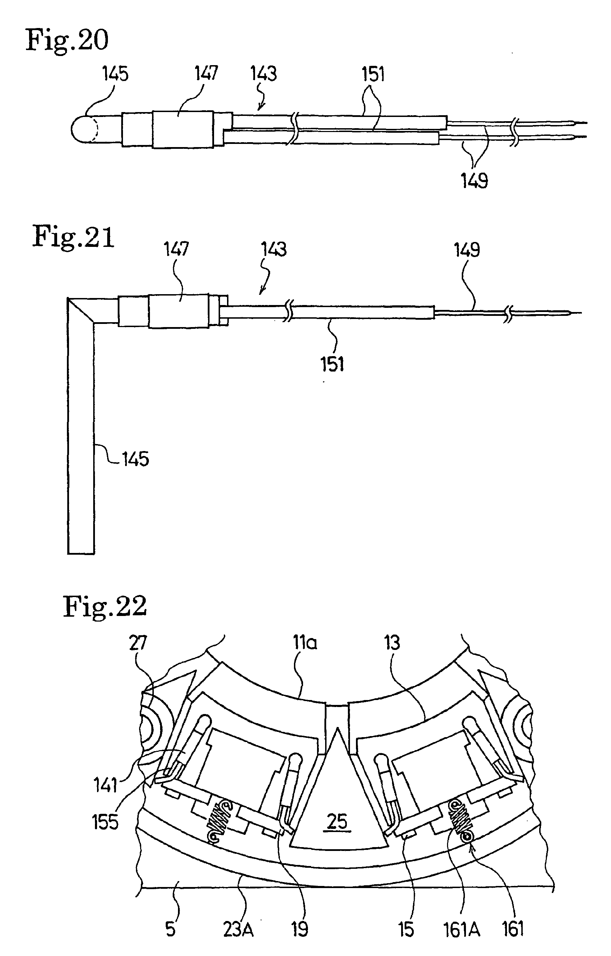

Each of the heating means 137, 139 and 141 may preferably employ, for example, an electric heater 143 as shown in FIGS. 20 and 21. The electric heater 143 includes a rod-shaped heating part 145 having a rod-shaped stainless steal sheath and a heating member encased therein, a vacuum terminal part 147 connected to one end of the heating part 145 and having terminals in a vacuum, and two cords 149 connected to the vacuum terminal part 147. The vacuum terminal side of each of the cords 149 is covered with a thermal insulation tube 151 made of fluororesin.

The rod-shaped heating parts 145 of the first heating means 137 are radially located inside the lower plate 5 in a predetermined interval along the circumferential direction. The thermal insulation tubes 151 covering the cords 149 which are connected to the vacuum terminal part 147 pass through the inside of the lower plate 5 and are led outside. As shown in FIG. 15, there is provided inside the lower plate 5 under the heating parts 145 a thermal insulating layer 152 which has a structure identical to that of the thermal insulating layer 21 described above.

The rod-shaped heating parts 145 of the second heating means 139 are radially placed inside the upper mold support plate 57. It is preferable that, as shown in FIG. 16, six rod-shaped hating parts 145 be radially mounted in an equal interval along the circumferential direction. The thermal insulation tubes 151 covering the cords 149 which are connected to the vacuum terminal part 147 extend upward and the cords 149 upwardly extend through the upper plate 51 (see FIG. 1). Provide on the upper surface of the upper mold support plate 57 is a thermal insulating layer 159 which is formed from a composite composed of fiber glass and heat-resistant resin such as epoxy resin having thermal durability.

The rod-shaped heating parts 145 of the third heating means 141 are positioned in a pair of vertically extending mounting holes formed in both sides of the inner peripheral portion of each holding segment 13. The upper surface of each holding segment 13 has a groove 155 in communication with each mounting hole 153, and the vacuum terminal part 147 and thermal insulation tubes 151 covering the cords 149 are placed in the groove 155. The cords 149 are led outside through cord leading-out parts 157 mounted to the cylindrical member 23A in a predetermined interval along the circumferential direction.

A fourth heating means 163, as shown in FIG. 15, is disposed between the lower mold section 7 and the lower mold bead ring 9. The fourth heating means 163 comprises an electric heater including a heating part which has a flexible pipe and a heating member encased therein, the heating part being deformable. Inside the lower mold section 7 under the fourth heating means 163 there is disposed a thermal insulating layer 165 having the same structure as the above, the thermal insulating layer 165 extending annularly along the lower mold circumferential direction. The fourth heating means 163 enables the bead portion W2 of the green tire W to be effectively heated under temperature control.

Provided between the cylindrical member 23A and each of the holding segments 13 is, as shown in FIG. 22, a positioning means 161 for positioning the holding segment 13 in a location in which the guide segment 16 engages with and disengages from the hold segment 13. The positioning means 161 comprises a spring member 161A formed from a coil spring, and the spring member 161A is coupled at its one end to the inner peripheral surface of the cylindrical member 23A and at the other end to the back surface of the holding segment 13. Since the spring members 161A are elongated when the sectors 11a are moved forward, the sectors 11a are not prevented from moving to the mold clamping position. When the sectors 11a reach the mold open position, or the position in which the guide segments 69 engages with and disengage from the holding segments 69, the spring members 161A come into non-elongating state and hold the holding segments13 in that position.

A method of curing the green tire W by means of the tire press mentioned above will be described below. First, when the green tire W is transported to the outer peripheral side of the bladder 29 by a carrier means, not shown, a pressurized fluid is supplied to the bladder 29 via the supply pipe 47, the passageway 47 and the emission member 43, whereby the green tire W is held from inside by the bladder 29 which has inflated. After the holding of the green tire W, the first cylinder 35 of the center mechanism 31 is actuated, thereby lowering the rod (elevating post) 35a to the curing position (position in FIG. 2).

Next, the upper mold support plate 57 is lowered by the actuation of the elevating cylinders 63 to move the upper mold section 59 and the upper mold bead ring 61 to a starting position for setting shown in FIG. 1. The rod 105a of the hydraulic cylinder 105 is then extended to lower the upper plate 51.

The upper mold section 59 and the upper mold bead ring 61 which are lowered by the lowering of the upper plate 51 come into engagement with and are positioned relative to the other side portion W4 and the other bead portion W5 of the green tire W; at the same time, the elevating cylinders 63 are released from activating, whereby the rods 63a of the elevating cylinders 63 are retractable.

Meanwhile, the guide segments 69 are lowered with the projections 71a of the segment bodies 71 being engaged with the grooves 13x of the holding segments 13. The inner peripheral surfaces 71b of the segment bodies 71 push against the bottom surfaces 13c of the holding segment depressions 13b from the radially outer side, thereby moving the holding segments 13 radially inward along the guide rails 15 to advance the sectors 11a toward the mold clamping position. The positioning pins 74 which are lowered are engaged with the positioning parts 27, whereby the upper plate 51 is positioned relative to the lower plate 5.

Just before the upper plate 51 reaches the lowermost position, that is, after the lower end of the slide ring member 85B of the lower ring assembly 85 of the first sealing means 75 has engaged with the annular flange portion 23B of the cylindrical member 23A and the lower end of the vertically movable lower ring 97 of the second sealing means 93 has engaged with the upper mold support plate 57, the vacuum pump 101A of the suction means 101 is operated to suck air in the chamber 99. The sucking is performed for a predetermined length of time to make the chamber 99 into a vacuum state.

After the upper plate 51 has reached the lowermost position, that is, the sectors 11a have advanced to the mold clamping position, and the sectors 11a, upper mold section 59 and lower mold section 7 has set up relative to the green tire W, the actuation of the locking means 109 causes the stops 115 to project to engage the stops 115 with the top end faces of the locking shafts 113. As a result of this, the locking shafts 113 are locked, whereby the upper mold section 59 is clamped to prevent the upper mold section 59 form being opened by an inner pressure applied during vulcanization (see FIG. 2).

A thermal pressurized medium is then supplied into the bladder 29 through the supply pipe 47, the passageway 45 and the emission member 43. Also, the first, second, third and fourth heating means heat the green tire W to cure it.

During curing, although the upper mold section 59 and the sectors 11a receive pressure in the mold opening directions by the thermal pressurized medium which has supplied to the bladder 29, the locking means 109 prevent the upper mold section 59 from opening. The sectors 11a are prevented from opening since the stop means engaging members 73 engage with the stop means 23.

After completion of the curing, the locking means 109 are released before the upper plate 51 is raised. The raising of the upper plate 51 raises the guide segments 69 while the sectors 11a are retracted toward the mold open position. When the sectors 11a reach the mold open position, the guide segments 69 are disengaged from the holding segments 13 and are elevated. Since the spring members 161A as the positioning means 161 are attached to the holding segments 13, the holding segments 13 from which the guide segments 69 have disengaged are always maintained in the position of engagement with and disengagement from the guide segments 69. After vulcanization, the cured tire is removed from the tire press to obtain it.

According to the present invention, since the sectors 11a and the holding segments 13 are not attached to the upper plate 51 side, but are mounted to the lower plate 5 side, the weight of the components supported by the upper plate 51 decreases much less than that of the components in the prior art. The upper plate 51 which supports the components can, therefore, be thinner, thereby allowing the upper plate 51 to be reduced in size as well as in weight. Also, the columns 55 slidably supporting the upper plate 51 can be thinner in diameter and the top plate 53 supporting the upper plate 51 via the hydraulic cylinder 105 can be smaller in thickness than before. Further, the hydraulic cylinder 105 can have the capacity much less than the prior art. Accordingly, the tire press can be minimized in size, and the space for installing the tire press can be reduced. Also, electric power consumed by the lifting means 103 for the upper plate 51 is reduced, thereby allowing a decrease in power consumption.

Since the holding segments 13 are always in engagement with the guide rails 15 of the lower plate 5 side and do not have a structure such as the prior art in which the holding segments engage therewith and disengage therefrom, the clearance between the holding segments 13 and the guide rails 15 can be smaller than that of the prior art. Accordingly, movement of the sectors 11a due to pressure applied to the sectors 11a from the radially inner side can be less than is known in the prior art, thereby allowing tire uniformity to be improved.

Since the electric heaters 143 are employed as means for heating the green tire W in place of conventional steam means, the tire press can be much smaller in size. By disposing the electric heaters 143 of the first, second and third heating means 137, 139 and 141 in the above positions, respectively, temperature control during vulcanization can be performed independently, which can effectively heat the green tire W to thereby shorten the curing time.

There is provided between the upper plate 51 and the lower plate 5 the first sealing means 75 which hermetically covers the entire mold during vulcanization, and air in the chamber 99 hermetically covered with the first sealing means 75 is sucked by the suction means 101 to make the chamber vacuum, thereby allowing trapped air between the green tire W and the mold in engagement therewith to be significantly reduced. When air is trapped between the mold and the green tire W, the air causes the tire surface to be rugged after vulcanization, resulting in a poor appearance. As mentioned above, since the trapped air can noticeably be reduced, appearance of the tire obtained after curing can be improved. Also, since the pressure (inner pressure) of a thermal pressurized fluid supplied to the bladder 29 can be lowered, the pressure which is applied to the upper mold section 59 and the sectors 11a and which acts as a mold opening pressure is reduced. As a result, since stiffness and strength of the components which hold the upper mold section 59 and the sectors 11a in the mold clamping position can be lowered, the cost of the components is reduced, thereby allowing a decrease in tire press cost. Also, a tire quality can be improved because the green tire W pressed by the bladder 29 is restrained from changing the angle of the reinforcement cords of the belt layers and carcass layer thereof, and from causing variations in thickness.

Since the holding segments 13 are provided via the linear bearings 17 on the guide rails 15 in an advancable and retractable manner, the holding segments can smoothly move along the guide rails and the looseness therebetween can be restrained. Accordingly, movement of the sectors 11a by the inner pressure during vulcanization can be reduced, thereby improving a tire quality.

The holding segments 13, which are slidably located on the guide rails 15, may move due to vibration or the like; by providing the positioning means 161 which position the holding segments 13 in the engagement position with the guide segments 69, the holding segments 13 can reliably be engaged with the guide segments 69 at all times, preventing a trouble at the clamping of the mold from happening.

The upper mold section 59 and the sectors 11a can always be held in the mold clamping position without causing the mold to open during curing, because there are provided the locking means 109 for locking the upper mold section 59 in the mold clamping position during curing and the stop means 23 for stopping the retraction of the holding segments 13. Thus, the occurrence of rubber overflow of the tire is prevented, and a tire with a good quality can be obtained.

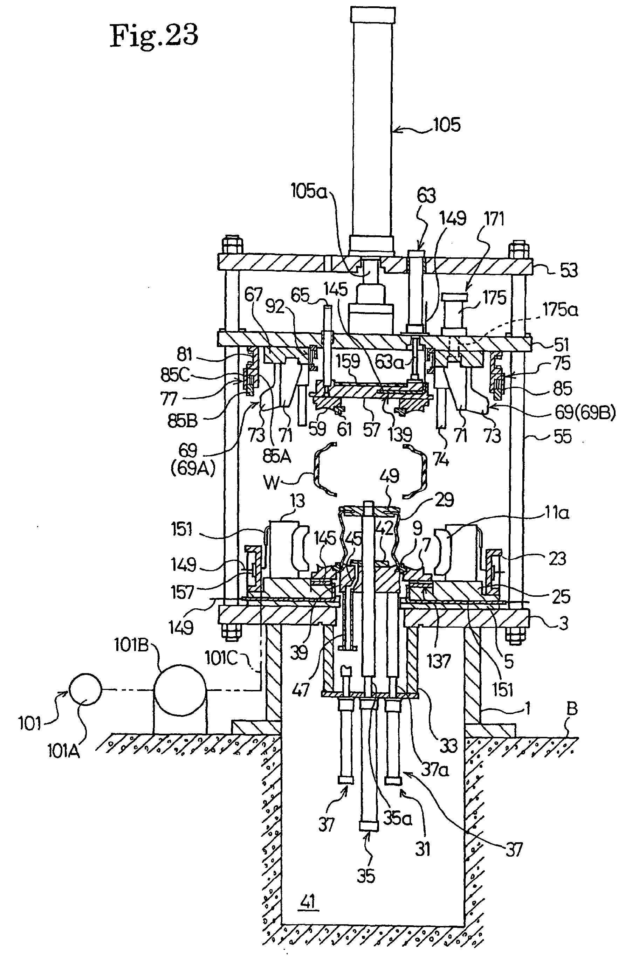

FIG. 23 shows another tire press according to the present invention. This apparatus has guide segments 69 comprising two groups of guide segments 69A and 69B in the tire press described above, each group comprising alternate guide segments. One group of guide segments 69A are fixedly attached to the annular segment attachment member 67 mounted on the lower surface of the upper plate 51. Each of the other group of guide segments 69B is attached to a lifting means 171 which is installed on the upper surface of the upper plate 51. The lifting means 171 includes a hydraulic cylinder 175 fixedly attached to the upper surface of the upper plate 51. The hydraulic cylinder 175 has a vertically extending rod 175a, to the lower end of which is secured the segment body 71 of the guide segment 69B.

According to the above tire press of FIG. 23, the activation of the hydraulic cylinders 175 extend the rods 175a to a predetermined length upon the lowering of the upper plate 51 to position the other group of guide segments 69B lower than the one group of guide segments 69A.

This causes the other group of guide segments 69B to engage with the holding segments 13 first and the sectors 11a that the holding segments 13 hold to advance first. When these sectors 11a come to the mold clamping position, the activation of the hydraulic cylinders 175 is released and the rods 175 are shortened with the lowering of the upper plate 51. When the upper plate 51 reaches the lowermost position, the sectors 11a which are moved forward by the holding segments 13 that the one group of guide segments 69A have engaged with come to the mold clamping position. The two groups of guide segments 69A and 69B, therefore, come into a time lag engagement with the holding segments 13 to thereby do a time lag mold clamping between each adjacent sectors 11a.

Since this can facilitate escaping air trapped between the green tire W and the sectors 11a which have engaged with the green tire W first, the tire appearance can be more improved.

In the embodiment shown in FIG. 23, the same number and even number of guide segments 69, holding segments 13 and sectors 11a are employed, and the number thereof may preferably be, for example, eight, ten or twelve.

In FIG. 23, the locking means 109 and the locking shafts 113 are not shown, but they are placed at locations in which they do not vertically overlap the lifting means 171.

As mentioned above, according to the present invention, since the sectors and the holding segments are mounted to the lower plate side, the weight of the components supported by the upper plate is reduced much less than that of the components in the prior art. As a result, the upper plate which supports the components can be reduced in size as well as in weight less than before. Associated components which liftably support the upper plate can also be reduced in size and in weight, and further, lifting means lifting the upper plate can be smaller in size. Accordingly, the tire press can be small-sized, and the installation space therefor can be reduced. Also, since the electric power consumed by the means for lifting the upper plate is reduced, power consumption can be lowered.

Since the holding segments are always in engagement with the lower plate side and do not have a conventional structure in which the holding segments engage therewith and disengage therefrom, the clearance between engagement parts can be smaller than that of the prior art. As a result, movement of the sectors is less than before at the mold clamping position when pressure is applied thereto from the radially inner side thereof during vulcanization, thereby allowing tire uniformity to be improved.

### INDUSTRIAL APPLICABILITY

The present invention having the aforementioned excellent effects can be used very effectively as a tire curing method and tire press for producing pneumatic tires for passenger cars, trucks, buses and the like.

## Claims

1. A tire curing method for curing a green tire by means of a tire press having a sectional type mold which includes an annular lower mold section secured to an upper surface of a lower plate, an annular upper mold section disposed under an upper plate vertically moveably placed above the lower plate so that the upper mold section moves vertically along with the upper plate, and a side mold section having a plurality of sectors divided along a circumferential direction thereof and located radially outwardly of said lower mold section in an openable and closable manner, wherein holding segments which hold the sectors are provided on outer peripheral sides thereof, the holding segments being placed on said lower plate so as to move forward and away from a center of said annular lower mold section, guide segments which are engagable with and disengagable from outer peripheral sides of the holding segments being suspended from said upper plate radially outwardly of said upper mold section, first heating means being provided under said lower mold section, second heating means being provided over said upper mold section, and third heating means being provided on the outer peripheral side of each of said sectors, said method comprising the steps of:
engaging said guide segments with said holding segments to cause the holding segments to move forward;
closing said sectors to set the green tire in the mold;
applying a pressure into the set green tire to inflate it; and
heating said green tire by said first, second and third heating means to cure it.

2. A tire press having a sectional type mold which includes an annular lower mold section secured to an upper surface of a lower plate, an annular upper mold section disposed under an upper plate vertically moveably placed above the lower plate so that the upper mold section moves vertically along with the upper plate, and a side mold section having a plurality of sectors divided along a circumferential direction thereof and located radially outwardly of said lower mold section in an openable and closable manner,
wherein holding segments which hold the sectors are provided on outer peripheral sides thereof, the holding segments being placed on said lower plate so as to move forward and away from a center of said annular lower mold section, guide segments which are engagable with and disengagable from outer peripheral sides of the holding segments being suspended from said upper plate radially outwardly of said upper mold section and being arranged such that the engagement of the guide segments with the holding segments causes the holding segments to move forward and backward to close and open said sectors, first heating means being provided under said lower mold section, second heating means being provided over said upper mold section, third heating means being provided on the outer peripheral side of each of said sectors, and the green tire set in the mold being curable by the heating means.

3. A tire press according to claim 2, wherein each of said first, second and third heating means comprises an electric heater.

4. A tire press according to claim 3, wherein said electric heater comprises a rod-shaped heating part.

5. A tire press according to claim 4, comprising a plurality of first heating means and second heating means, the rod-shaped heating parts of said first heating means being arranged radially under said lower mold section within the lower plate, said upper mold section being secured to an upper mold support plate vertically movably attached to an lower surface of said upper plate, the rod-shaped heating parts of said second heating means being placed radially in said upper mold support plate, the rod-shaped heating parts of said third heating means being embedded in the holding segments so as to vertically extend on both sides of the inner periphery of each holding segment.

6. A tire press according to claim 5, comprising thermal insulating layers which are placed in the lower plate under the rod-shaped heating parts of said first heating means, on an upper surface of said upper mold support plate, and on an underside of each of said holding segments.

7. A tire press according to claim 6, wherein said thermal insulating layers are formed from a composite composed of fiber glass and heat-resistant resin.

8. A tire press according to claim 2, comprising a locking means for locking the upper mold section in a mold closed position during curing.

9. A tire press according to claim 8, comprising a base plate on an upper surface of which is secured said lower plate, a plurality of vertically extending columns being provided on an outer periphery of the base plate at a predetermined interval, a top plate being secured to top ends of the columns, said upper plate being vertically slidably attached to the columns, said upper mold section being secured to an upper mold support plate vertically movabley attached to a lower surface of said upper plate, a locking shaft being provided on an upper surface of said upper plate and vertically extending through said top plate, said locking means being mounted on an upper surface of said top plate and having a stop for preventing the raising of said locking shaft.

10. A tire press according to claim 9, wherein said locking means comprises a hydraulic cylinder unit which projects and retracts said stop, the raising of the locking shaft being prevented by engagement of said stop in a projected position with a top end of said locking shaft.

11. A tire press according to claim 2, comprising a stop means for preventing the holding segments from moving backward during curing, the stop means being provided radially outwardly of the holding segments on an upper surface of said lower plate.

12. A tire press according to claim 11, wherein said stop means comprises a cylindrical member secured to the upper surface of said lower plate so as to surround the whole holding segments, said holding segments being prevented from moving backward by engagement of said guide segments, engaged with said holding segments, with said cylindrical member when inner pressure is applied thereto during curing.

13. A tire press according to claim 12, wherein each of said guide segments has a stop means engaging member engagable with said cylindrical member in an outer peripheral side of the guide segment.

14. A tire press according to claim 2, comprising a first sealing means for hermetically sealing the entire mold during curing, the first sealing means being provided between said upper plate and said lower plate.

15. A tire press according to claim 14, wherein said first sealing means comprises a first sealing cylindrical assembly which is provided on a lower surface of said upper plate.

16. A tire press according to claim 15, wherein said first sealing cylindrical assembly comprises an upper ring member secured to the lower surface of said upper plate, and a lower ring assembly attached to a lower side of the upper ring member, the lower ring assembly being arranged to be vertically movable.

17. A tire press according to claim 16, comprising a stop means for preventing the holding segments from moving backward during curing, the stop means being provided radially outwardly of the holding segments on an upper surface of said lower plate and comprising a cylindrical member hermetically secured to the upper surface of said lower plate so as to surround the entire holding segments, said lower ring assembly being hermetically engagable at a lower end thereof with an upper end of the cylindrical member.

18. A tire press according to claim 14, wherein said upper mold section is secured to an upper mold support plate vertically movably attached to a lower surface of said upper plate, a plurality of guide rods being provided on an outer periphery of an upper surface of the upper mold support plate at a predetermined interval and vertically extending through said upper plate, a second sealing means being provided outwardly of the guide rods between said upper mold support plate and said upper plate so that the second sealing means makes a hermetical seal between said upper plate and said upper mold support plate during curing in a manner that a space including the guide rods are positioned inside the second sealing means.

19. A tire press according to claim 18, wherein said second sealing means comprises a second sealing cylindrical assembly which is provided on the lower surface of said upper plate, the hermetical seal between said upper plate and said upper mold support plate being made by engagement of an lower end of the second sealing cylindrical assembly with said upper mold support plate.

20. A tire press according to claim 19, wherein said second sealing cylindrical assembly comprises an upper ring secured to the lower surface of said upper plate, and a lower ring coupled to a lower side of the upper ring, the lower ring being arranged to be vertically movable.

21. A tire press according to claim 14, comprising a suction means connected to a chamber hermetically surrounded by said first sealing means, to make the chamber vacuum.

22. A tire press according to claim 2, comprising a pair of guide rails for moving each of the holding segments forward and backward, the guide rails being provided on an upper surface of the lower plate radially outwardly of said lower mold section.

23. A tire press according to claim 22, wherein each holding segment is forwardly and backwardly movably provided on said pair of guide rails via linear bearings.

24. A tire press according to claim 2, comprising a plurality of positioning means for positioning said holding segments to locations in which the holding segments are engaged with and disengaged from said guide segments.

25. A tire press according to claim 24, wherein said positioning means each comprise a spring member which positions each of said holding segments to the location in which the holding segment is engaged with and disengaged from the guide segment.

26. A tire press according to claim 25, comprising a stop means for preventing the holding segments from moving backward during curing, the stop means being provided on an upper surface of said lower plate radially outwardly of the holding segments and comprising a cylindrical member secured to the upper surface of said lower plate so as to surround the entire holding segments, said spring member connecting said cylindrical member and each of the holding segments.

27. A tire press according to claim 2, wherein said guide segments comprise two groups of guide segments each having alternate guide segments, whereby said holding segments can be moved forward with a time lag.

28. A tire press according to claim 27, comprising a plurality of lifting means for vertically moving one of said two groups of guide segments, which are provided on said upper plate.

29. A tire press according to claim 2, wherein engagement surfaces of said holding segments and guide segments are formed in inclined surfaces at the substantially same angle with respect to the vertical direction, the angle of the inclined surfaces with respect to the vertical direction being 15 to 20 degrees.

30. A tire press according to claim 2, comprising a center mechanism which is provided radially inwardly of said lower mold section, the center mechanism having a vertically extending elevating post which is vertically movable, and a bladder for curing which is attached to an upper part of the elevating post.
